# EUROPÄISCHE PATENTSCHRIFT

(11) **EP 2 802 856 B1**
(45) Veröffentlichungstag und Bekanntmachung des Hinweises auf die Patenterteilung: **23.03.2016**
(21) Anmeldenummer: 13703640.6
(22) Anmeldetag: 03.01.2013
(51) Int. Cl.: G01N 1/20, F27D 7/02

(54) **VORRICHTUNG ZUR ENTNAHME VON PROBEN AUS EINEM MATERIALSTROM**
DEVICE FOR REMOVING SAMPLES FROM A MATERIAL STREAM
DISPOSITIF PERMETTANT DE PRÉLEVER DES ÉCHANTILLONS DANS UN FLUX DE MATIÈRE

(30) Priorität: 12.01.2012 AT 312012
(43) Veröffentlichungstag der Anmeldung: 19.11.2014
(73) Patentinhaber: Holcim Technology Ltd., 8645 Rapperswil-Jona (CH)
(72) Erfinder: D'ARIENZO, Simone, CH-5116 Schinznach-Bad AG, Schweiz (IT)
(74) Vertreter: Keschmann, Marc
(86) Internationale Anmeldenummer: PCT/IB2013/000007
(87) Internationale Veröffentlichungsnummer: WO 2013/104971

(56) Entgegenhaltungen:
- WO-A1-2011/006869
- US-A- 2 370 260
- US-A- 3 802 270
- US-A- 4 625 570

## Beschreibung

Die Erfindung bezieht sich auf eine Vorrichtung zur Entnahme von Proben aus einem Materialstrom von feinkörnigem und trockenem Material, insbesondere in der Zementindustrie, umfassend eine durch einen Einführstutzen in den Materialstrom bringbare und zurückziehbare, nach oben offene Probenkammer.

Die Erfindung bezieht sich weiters auf eine Wärmetauscheranordnung einer Zementklinkerherstellungsanlage umfassend eine Mehrzahl von Wärmetauschern, in denen Rohmehl im Gegenstrom zu den heißen Abgasen aus dem Klinkerofen vorgewärmt und ggf. vorkalziniert werden kann, wobei eine für einen Heißmehlstrom vorgesehene, vertikale oder schräg nach unten verlaufende Rohrleitung des Wärmetauscherstrangs einen Einführstutzen aufweist, durch den die Probenkammer der erfindungsgemäßen Probenentnahmevorrichtung in den Heißmehlstrom bringbar ist.

Die regelmäßige Entnahme von Proben aus einem Materialstrom eines insbesondere heißen, feinkörnigen und trockenen Materials ist vor allem in der Zementindustrie von großer Bedeutung für die Prozesskontrolle und -steuerung. Es ist beispielsweise bekannt, Proben von aus dem Rohmehlvorwärmer oder -vorkalzinator kommendem Heißmehl zu nehmen, wie dies in der Zeitschrift "Zement-Kalk-Gips", Nr. 8/1994, Seiten 468ff. beschrieben ist. Wie dort ausgeführt ist, ergibt sich die Notwendigkeit der Probenentnahme daraus, dass mit den Zementrohmaterialien und Brennstoffen u.a. flüchtige Verbindungen wie Alkalien, Schwefel und Chlor in den Brennprozess eingebracht werden. Erhöhte Konzentrationen dieser Stoffe verursachen in Verbindung mit überhöhten Flüchtigkeiten und daraus resultierenden Salzkreisläufen im Ofeneinlauf und im unteren Wärmetauscherbereich häufig erhebliche Betriebs- oder auch Qualitätsprobleme. Ein erkennbares Zeichen für aufkommende Prozessveränderungen findet sich in den Salzanreicherungen im Heißmehl der untersten Zyklonstufe eines Schwebegaswärmetauscherstrangs. Bei Überschreitung eines für jede Ofenanlage spezifischen Grenzwertes werden Eingriffe bzw. Veränderungen in der Prozessführung erforderlich. Die dabei auftretenden betrieblichen Schwierigkeiten, wie z.B. Ansatzbildungen, lassen sich normalerweise nur durch manuelles Abreinigen, durch regelmäßiges Abschießen mittels Luftkanonen oder gelegentliches Zünden von Druckgaspatronen sowie durch Zuschaltung eines Gasbypasses im Ofeneinlaufbereich beherrschen.

Aus der Analyse der Rohmehl- und Heißmehlproben lassen sich die inneren Salzkreisläufe berechnen. Daraus wird nach einem bestimmten Algorithmus der spezifische Salzgehalt ermittelt. Übersteigt dieser Salzgehalt einen kritischen Grenzwert, so können aufkommende Prozessstörungen u.a. durch eine Verringerung des Salzgehaltes über ein Gasbypasssystem beseitigt werden. Dieser Teilabzug heißer Ofenabgase bedeutet erhebliche Energie- und Materialverluste und stellt deshalb auch einen entsprechend hohen Kostenfaktor dar. Die Minimierung von Bypassmengen ist deshalb ein vorrangiges Ziel betrieblicher Bemühungen.

Die Entnahme von Heißmehlproben dient weiters der Bestimmung des Kalzinierungsgrades des Heißmehls. Der Kalzinierungsgrad ist ein wichtiger Kontrollparameter im Rahmen der Prozesssteuerung einer Klinkerherstellungsanlage.

Probenentnahmevorrichtungen müssen im Falle der Heißmehlentnahme für den Einsatz bei Temperaturen von bis zu 1000°C ausgelegt sein. Weiters ist es wichtig, die entnommene Probe so schnell wie möglich abzukühlen, damit sich der stoffliche Zustand der Probe so wenig wie möglich ändert, beispielsweise um eine weitere Kalzinierung des Heißmehls zu vermeiden. Dies bedeutet, dass die mit Material gefüllte Probenkammer so schnell wie möglich aus dem Materialstrom entfernt und dann so schnell wie möglich entleert werden muss.

Eine weitere Schwierigkeit bei der Entnahme einer Probe aus einem Materialstrom ist die Kontrolle der Probenmenge, da das allein auf Grund der Schwerkraft frei fallende Material relativ unkontrolliert in die Entnahmevorrichtung gelangt. Bei der Entnahme einer Probe muss einerseits sichergestellt werden, dass die Probe in einer Mindestmenge vorliegt, die es erlaubt, die jeweils gewünschten Analyseschritte durchzuführen. Andererseits ist die Entnahme einer zu großen Menge unwirtschaftlich.

Außerdem besteht die Gefahr eines Verstopfens oder Blockierens der Probenentnahmevorrichtung, und zwar insbesondere des für die Einbringung der Probenkammer in den heißen Materialstrom vorgesehenen Kanals oder Einführstutzens. Ein Verstopfen oder Blockieren kann beispielsweise dadurch passieren, dass das Material aus dem Materialstrom sich im genannten Kanal, im Einführstutzen oder an den dem Materialstrom ausgesetzten Bauteilen der Entnahmevorrichtung ansetzt, was allenfalls zu größeren Materialagglomerationen führen kann, die den ungehinderten Eintritt der Probenkammer in den Materialstrom behindern oder erschweren können.

Dokumente US 3802270, US 4625570 und WO 2011006869 stellen Probenentnahmenvorrichtungen des Stands der Technik dar.

Die vorliegende Erfindung zielt daher darauf ab, eine Proben-entnahmevorrichtung gemäß Anspruch 1 bereitzustellen, mit der den oben genannten Problemen Rechnung getragen werden kann.

Zur Lösung dieser Aufgabe sieht die Erfindung bei einer Vorrichtung der eingangs genannten Art vor, dass die Probenkammer in einem translatorisch zwischen einer Probenentnahmeposition und einer zurückgezogenen Position geführten stabförmigen Körper ausgebildet ist und dass die Probenkammer einen öffenbaren Boden aufweist. Das Nehmen einer Probe erfolgt dabei in einfacher Weise dadurch, dass der stabförmige Körper, in den die Probenkammer integriert ist, durch den Einführstutzen zumindest teilweise in die den Materialstrom führende Rohrleitung hineingeschoben wird, sodass die Probenkammer in den Materialstrom gelangt. Die Probenkammer wird dann für eine bestimmte Zeit im Materialstrom gehalten, bis sich eine gewünschte Menge des feinkörnigen Materials in der Probenkammer angesammelt hat. Danach wird der stabförmige Körper soweit zurückgezogen, dass die Probenkammer aus dem Materialstrom entfernt und durch den Einführstutzen hindurch in einen Bereich gebracht wird, in dem sie einfach und schnell entleert werden kann. Es reicht somit eine einfache translatorische Hin- und Herbewegung des stabförmigen Körpers, um eine Probe entnehmen zu können. Dadurch kann der bauliche Aufwand reduziert und eine zuverlässige Funktionsweise sichergestellt werden.

Der stabförmige Körper hat gleichzeitig die Funktion, den Einführstutzen abzudichten, damit das meist sehr heiße feinkörnige Material nicht durch den Einführstutzen hindurch nach außen gelangen kann. Eine Abdichtung gelingt besonders gut, wenn in Übereinstimmung mit einer bevorzugten Weiterbildung der Erfindung der stabförmige Köper einen Querschnitt aufweist, der im Wesentlichen dem lichten Querschnitt des Einführstutzens entspricht.

Verstopfungen oder Blockierungen können hierbei dadurch verhindert werden, dass allfällige Materialablagerungen im Inneren des Einführstutzens durch die Hin- und Herbewegung des stabförmigen Körpers mitgenommen und in den Materialstrom zurückgebracht werden. Die Ausbildung ist zu diesem Zweck bevorzugt derart getroffen, dass die dem Materialstrom zugewandte Stirnfläche des stabförmigen Körpers im Wesentlichen dem lichten Querschnitt des Einführstutzens entspricht.

Durch die im stabförmigen Körper ausgebildete, oben offene Probenkammer wird ein definiertes Volumen bereitgestellt, das mit Material befüllt werden kann, wobei überschüssiges Material über den Rand der Probenkammer herabfallen kann, sobald die Probenkammer voll gefüllt ist. Eine gegebenenfalls über den Rand der Probenkammer vorragende Materialanhäufung wird beim Zurückziehen des stabförmigen Köpers bevorzugt an der Mündung des Einführstutzens abgestreift, sodass die maximale Probenmenge tatsächlich durch das Volumen der Probenkammer begrenzt ist.

Nach dem oder während des Zurückziehens des stabförmigen Körpers erfolgt die Entleerung der Probenkammer durch Öffnen des Bodens der Kammer. Durch den öffenbaren Boden gelingt ein Entleeren der Kammer auch ohne dass eine gesonderte Manipulation des gesamten stabförmigen Körpers erforderlich wäre, wie beispielsweise ein Kippen oder Umdrehen. Die Entleerung gelingt dadurch wesentlich schneller und effizienter. Bevorzugt ist der öffenbare Boden von einem in der Bodenebene verlagerbaren Körper gebildet. Der verlagerbare Körper ist beispielsweise ein stabförmiger Körper, der wesentlich flacher ausgebildet, aber bevorzugt die gleiche Breite haben kann wie der die Probenkammer beherbergende stabförmige Körper. Der die Probenkammer beherbergende Körper und der den Boden bildende Körper bilden gemeinsam somit einen stabförmigen Gesamtkörper, der einen rechteckigen Querschnitt aufweist. Der rechteckige Querschnitt ermöglicht eine möglichst spielfreie und zuverlässige translatorische Führung des Körpers im Einführstutzen bzw. in einem Einführkanal.

Der den Boden bildende Körper kann auf verschiedene Art und Weise in der Bodenebene verlagert werden, um die Probenkammer zu öffnen. Beispielsweise ist es denkbar den Bodenkörper in Richtung der translatorischen Bewegung relativ zum die Probenkammer beherbergenden stabförmigen Körper zurückzuziehen. Mit Vorteil ist die Ausbildung jedoch so getroffen, dass der den Boden bildende Körper zur Ermöglichung einer scherenartigen Öffnungsbewegung des Bodens am stabförmigen Körper verschwenkbar gelagert ist.

Um den Boden nach dem Zurückziehen öder auch noch während des Zurückziehens der Probenkammer aus dem Materialstrom möglichst ohne Zeitverzug automatisch öffnen zu können, ist vorgesehen, dass ein Steuerelement, insbesondere eine Steuerrampe des den Boden bildenden Körpers mit einem ortsfesten Auflaufelement zusammenwirkt, um die Öffnungsbewegung des Bodens in Abhängigkeit vom Hub des stabförmigen. Körpers zu steuern.

Das Entleeren der Probenkammer kann hierbei dadurch begünstigt werden, dass, der stabförmige Körper mit einem ortsfesten, in Verschieberichtung wirksamen Anschlag zusammenwirkt, der die zurückgezogene Position des stabförmigen Körpers definiert. Das Anschlagen an den ortfesten Anschlag bewirkt ein ruckartiges Stoppen des stabförmigen Körpers, wobei der dabei entstehende Stoß auf das in der Probenkammer enthaltene Material wirkt und ein Lösen des Materials von den Kammerwänden bewirkt und dadurch in der Folge ein Herabfallen des Materials aus der geöffneten Kammer unter der Wirkung der Schwerkraft ermöglicht. Besonders vorteilhaft ist es hierbei, wenn das abrupte Stoppen dies stabförmigen Körpers zu einem Zeitpunkt erfolgt, zu dem der Boden der Probenkammer bereits geöffnet wurde. Das Steuerelement ist derart angeordnet, dass die Öffnungsbewegung des Bodens beendet ist, wenn der stabförmige Körper am ortsfesten Anschlag zu liegen kommt.

Das aus der Probenkammer herabfallende Material gelangt in einen Sammelbehälter, der in der Folge zur Durchführung der gewünschten Analysen in ein Labor transportiert wird. Eine bevorzugte Ausbildung sieht dabei vor, dass ein Probesammelbehälter unterhalb der Probenkammer in der zurückgezogenen Position angeordnet ist, wobei zwischen dem Boden der Probenkammer und dem Probensammelbehälter eine freie Fallstrecke für das aus der Probenkammer herabfallende Material vorgesehen ist. Der freie Fall des Materials ist hierbei von besonderer Bedeutung, um ein ausreichend schnelles Abkühlen der Probe zu gewährleisten. Versuche haben gezeigt, dass das Material über eine Fallstrecke von lediglich 40 - 50 cm von 900°C auf eine ausreichend tiefe Temperatur abkühlt, um eine weitere Kalzinierung zu unterbinden.

Bei bestimmten Materialien besteht die Gefahr, dass das Material an den Wänden der Probenkammer anhaftet oder innerhalb der Probenkammer zu einer Brückenbildung neigt, was zu Problemen beim Entleeren der Probenkammer führt. Diesem Problem kann dadurch Rechnung getragen werden, dass, wie dies einer weiteren bevorzugten Ausbildung entspricht, die Probenkammer sich zum Boden hin erweitert. Dies führt zu dem Effekt, dass der untere Bereich der Probenkammer mehr Material beinhaltet als der obere Bereich, wobei das höhere Gewicht des im unteren Bereich enthaltenen Materials nach dem Öffnen des Bodens das im oberen Bereich enthaltene Material mitzieht und allfällige Brücken zerstört werden. Bevorzugt erweitert sich die Probenkammer konisch, was bei einer mit rechteckigem Grundriss ausgebildeten Probenkammer dazu führt, dass die Probenkammer einen trapezförmigen Querschnitt aufweist.

Eine weitere Maßnahme, mit der das vollständige Entleeren der Probenkammer begünstigt werden kann, liegt bevorzugt darin, dass der stabförmige Körper mit einer Vibrationseinrichtung, z.B. einer Ultraschallsonde in Wirkverbindung steht. Die Vibrationseinrichtung ist bevorzugt unmittelbar am stabförmigen Körper befestigt und versetzt diesen in Schwingung.

Ein Anhaften des Materials in der Probenkammer wird bevorzugt auch dadurch verhindert, dass die Innenfläche der Probenkammer zur Vermeidung von Anhaftungen oberflächenbehandelt, insbesondere geglättet ist.

Dadurch, dass das Zurückziehen des die Probenkammer beherbergenden stabförmigen Körpers sowie das anschließende Entleeren der Probenkammer konstruktionsbedingt sehr schnell erfolgen können, wird der Aufwand für eine allfällige Kühlung der Probenentnahmevorrichtung minimiert, wobei auf eine gesonderte Kühleinrichtung sogar gänzlich verzichtet werden kann. Dies wird noch dadurch begünstigt, wenn der stabförmige Körper und der den Boden bildende Körper gemäß einer bevorzugten Weiterbildung aus Metall, insbesondere Stahl bestehen. Eine besonders robuste und wenig verschleißanfällige Ausbildung gelingt hierbei dadurch, dass der stabförmige Körper mit Vorteil als Metallvollkörper ausgebildet ist.

Die translatorische Verschiebung des stabförmigen Körpers zwischen der Probenentnahmeposition und der zurückgezogenen Position erfolgt bevorzugt dadurch, dass der stabförmige Körper mit einem hydraulischen oder pneumatischen Antrieb zusammenwirkt. Ein derartiger Antrieb zeichnet sich durch eine hohe Zuverlässigkeit auch bei den im Bereich der Probenentnahme hohen Temperaturen aus und ermöglicht einen vollautomatischen Betrieb der Vorrichtung.

Um eine präzise Führung des stabförmigen Körpers zu gewährleisten, sieht eine weitere bevorzugte Ausbildung vor, dass der stabförmige Körper an wenigstens einer Führungsschiene translatorisch geführt ist. Mit Vorteil trägt der stabförmige Körper hierbei wenigstens zwei Rollen, die mit der Führungsschiene zusammenwirken.

Die erfindungsgemäße Probenentnahmevorrichtung eignet sich besonders für die Entnahme von Heißmehlproben aus einem Wärmetauscher einer Zementklinkerherstellungsanlage. Die Erfindung betrifft daher gemäß einem weiteren Aspekt eine Wärmetauscheranordnung einer Zementklinkerherstellungsanlage umfassend eine Mehrzahl von Wärmetauschern gemäß Anspruch 15, in denen Rohmehl im Gegenstrom zu den heißen Abgasen aus dem Klinkerofen vorgewärmt und ggf. vorkalziniert werden kann, wobei eine für einen Heißmehlstrom vorgesehene, vertikale oder schräg nach unten verlaufende Rohrleitung der Wärmetauscheranordnung einen Einführstutzen aufweist, wobei die Wärmetauscheranordnung eine erfindungsgemäße Probenentnahmevorrichtung aufweist, deren Probenkammer durch den Einführstutzen in den Heißmehlstrom bringbar ist.

Bevorzugt schließt die Achse des Einführstutzens mit der Horizontalen einen Winkel von 0° - 20°, insbesondere 0° - 10°, ein. Dementsprechend wird der die Probenkammer beherbergende stabförmige Körper in waagrechter oder annähernd waagrechter Richtung in den Materialstrom eingeführt, sodass das Material des in der Regel senkrecht oder annähernd senkrecht gerichteten Materialstroms effizient in der Probenkammer aufgefangen werden kann. Die beschriebene Anordnung erlaubt das Entfernen der Probenentnahmevorrichtung im laufenden Betrieb ohne dass heißes Material aus dem Einführungsstutzen austritt. Dies verbessert die Möglichkeiten zur Instandhaltung und vermindert das Risiko von Unfällen und Verletzungen.

Bevorzugt ist der Einführstutzen an einer Heißmehlaustrittsleitung der untersten Schwebegaswärmetauscherstufe des Wärmetauscherstrangs angeordnet.

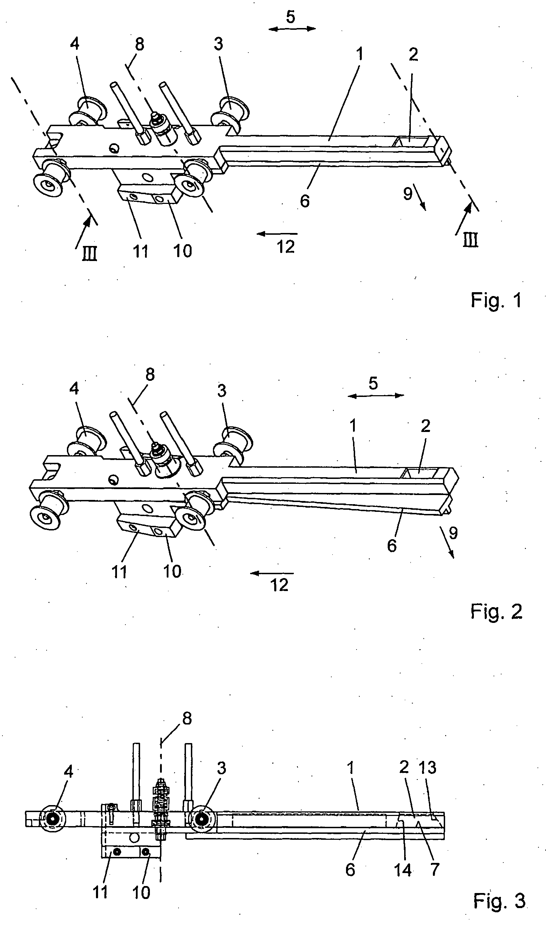

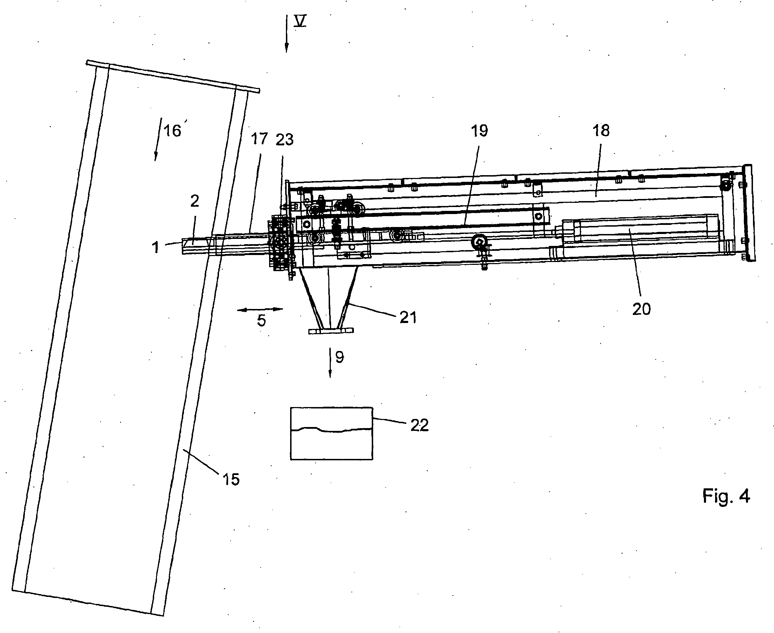

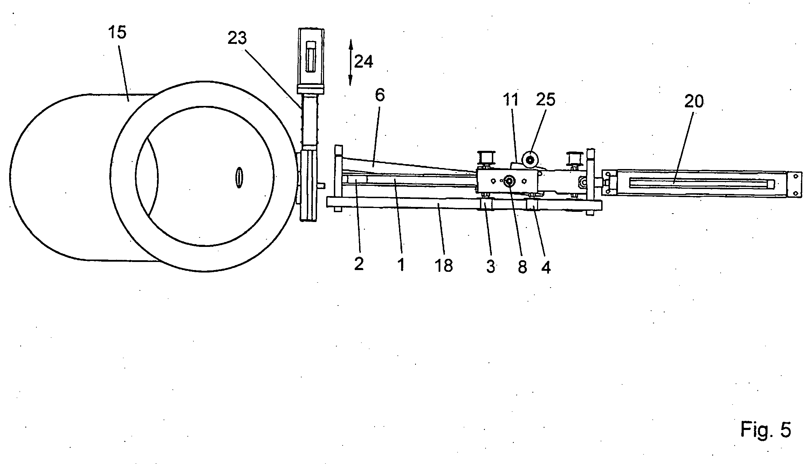

Die Erfindung wird nachfolgend anhand eines in der Zeichnung schematisch dargestellten Ausführungsbeispiels näher erläutert. In dieser zeigen Fig.1 eine erfindungsgemäße Probenentnahmevorrichtung in perspektivischer Ansicht, Fig. 2 die Vorrichtung gemäß Fig. 1 mit geöffnetem Boden der Probenkammer, Fig. 3 einen Längsschnitt entlang der Linie III-III der Fig. 1, Fig. 4 eine Einbausituation der Vorrichtung an einer Heißmehlaustrittsleitung der untersten Schwebegaswärmetauscherstufe eines Rohmehlvorwärmers für die Zementklinkerherstellung und Fig. 5 eine Ansicht gemäß dem Pfeil V der Fig. 4.

In Fig. 1 ist ein stabförmiger Körper mit 1 bezeichnet, der einen im Wesentlichen rechteckigen Querschnitt aufweist. In seinem vorderen Bereich weist der aus vollem Material bestehende stabförmige Körper 1 eine Durchbrechung aus, die eine oben offene Probenkammer 2 ausbildet. Die Probenkammer 2 stellt ein definiertes Volumen für aus einem Materialstrom zu sammelndes feinkörniges Material zur Verfügung. Im hinteren Bereich ist der stabförmige Körper 1 verbreitert ausgebildet und trägt zwei Rollenpaare 3 und 4, die jeweils frei drehbar gelagert sind und auf nicht dargestellten ortsfesten Führungsschienen abrollen können, um den stabförmigen Körper 1 in Richtung des Doppelpfeils 5 translatorisch zu führen.

In Fig. 1 ist weiters ein stabförmiger Körper 6 ersichtlich, der zumindest im vorderen Bereich der Vorrichtung mit dem stabförmigen Körper 1 deckungsgleich ist. Der stabförmige Körper 6 weist somit in seinem vorderen Bereich die gleiche Breite auf wie der stabförmige Körper 1, ist aber wesentlich flacher ausgebildet. Der stabförmige Körper 6 bildet hierbei in der in Fig. 1 dargestellten Position den Boden 7 der Probenkammer 2 aus. Der stabförmige Körper 6 ist in seinem hinteren Bereich um einen Schwenkachse 8 schwenkbar am stabförmigen Körper 1 gelagert und kann aus der in Fig. 1 dargestellten Position in die in Fig. 2 dargestellte Position verschwenkt werden. Dabei führt der stabförmige Körper 6 relativ zum stabförmigen Körper 1 eine scherenartige Bewegung aus, wodurch der Boden 7 der Probenkammer 2 geöffnet bzw. zur Seite verschwenkt wird und das in der Probenkammer 1 befindliche Material in Richtung des Pfeils 9 unter der Wirkung der Schwerkraft herausfallen kann.

Der flache stabförmige Körper 6 weist einen rechteckigen Querschnitt mit einer in Verschieberichtung. (Doppelpfeil 5) verlaufenden Rippe auf, die eine ausreichende mechanische Festigkeit des flachen stabförmigen Körpers 6 sicherstellt.

Der flache stabförmige Körper 6 weist in seinem hinteren Bereich weiters ein seitlich vorragendes mechanisches Steuerelement 10 auf, das eine hinter der Schwenkachse 8 angeordnete Rampe 11 umfasst. Bei einem Zurückziehen der Vorrichtung in Richtung des Pfeils 12 läuft die Rampe 11 auf ein der Übersichtlichkeit halber nicht dargestelltes ortsfestes Auflaufelement auf und bewirkt mit fortschreitendem Hub eine Verschwenkung des stabförmigen Körpers.

In der Schnittdarstellung gemäß Fig. 3 ist ersichtlich, dass die Probenkammer 2 einen Boden 7 aufweist, der von dem stabförmigen Körper 6 gebildet wird. Die Vorderwand 13 und die Rückwand 14 der Probenkammer 2 divergieren nach unten hin, sodass sich ein trapezförmiger Querschnitt ergibt. Die Probenkammer 2 verbreitert sich somit nach unten hin.

In den Fig. 4 und 5 ist dargestellt, wie die Probenentnahmevorrichtung an einer Heißmehlaustrittsleitung eines Rohmehlvorwärmers angeordnet werden kann. Die Heißmehlrohrleitung, in der nicht dargestelltes Heißmehl in Richtung des Pfeils 16 strömt, ist mit 15 bezeichnet. Die Rohrleitung 15 weist einen Einführstutzen 17 auf, der die Wand der Rohrleitung 15 durchsetzt und in das Innere der Rohrleitung 15 mündet. Um eine Heißmehlprobe zu entnehmen wird der stabförmige Körper 1 der Probenentnahmevorrichtung durch den Einführstutzen 17 hindurch soweit in das Innere der Rohrleitung 15 geschoben, bis, wie dies in Fig. 4 dargestellt ist, die Probenkammer 2 vollständig im Inneren der Rohrleitung 15 angeordnet ist. Die Probenentnahmevorrichtung ist an einem Traggerüst 18 befestigt, das unter anderem die Führungsschienen 19 trägt, an denen der stabförmige Körper 1 mit Hilfe der Rollenpaare 3 und 4 translatorisch geführt ist. Das Traggerüst 18 beherbergt weiters einen hydraulischen, pneumatischen oder elektrischen Antrieb, z.B. in der Form eines hydraulischen Zylinderkolbenaggregates 20, um den stabförmigen Körper 1 zwischen der in Fig. 4 dargestellten Probenentnahmeposition und der in Fig. 5 dargestellten zurückgezogenen Position zu bewegen.

In der zurückgezogenen Position gelangt die Probenkammer 2 in den Bereich eines ebenfalls am Traggerüst 18 angeordneten Ablauftrichters 21, über den die nach dem Öffnen des Bodens der Probenkammer 2 auf Grund der Schwerkraft nach unten fallende Heißmehlprobe in den Probensammelbehälter 22 gelangt.

In der Draufsicht gemäß Fig. 5, in der das Traggerüst sowie eine der beiden Führungsschienen 19 der Übersichtlichkeit halber weggelassen wurden, ist ersichtlich, dass der Einführstutzen 17 mit Hilfe eines entsprechend dem Doppelpfeil 24 verschiebbaren Absperrschiebers 23 verschlossen werden kann, wenn sich der stabförmige Körper 1 der Probenentnahmevorrichtung in der zurückgezogenen Position befindet. Weiters ist der Mechanismus zum automatischen Öffnen des Probenkammerbodens ersichtlich. Der Mechanismus umfässt eine ortsfeste, am Traggerüst 18 befestigte Auflaufrolle 25, auf welche die Steuerrampe 11 aufläuft, die an dem den Boden 7 der Probenkammer 2 bildenden, seitlich ausschwenkbare Körper 6 ausgebildet ist. Das Auflaufen der Steuerrampe 11 bewirkt dabei, dass eine im wesentlichen senkrecht zur Verschieberichtung 5 wirkende Kraft auf den Körper 6 ausgeübt wird, welche bei fortschreitender Verschiebebewegung des stabförmigen Körpers 1 ein scherenartiges Ausschwenken des Körpers 6 bewirkt.

## Patentansprüche

1. Vorrichtung zur Entnahme von Proben aus einem Materialstrom von feinkörnigem und trockenem Material, insbesondere in der Zementindustrie, umfassend eine durch einen Einführstutzen in den Materialstrom bringbare und zurückziehbare, nach oben offene Probenkammer (2), welche in einem translatorisch zwischen einer Probenentnahmeposition und einer zurückgezogenen Position geführten stabförmigen Körper (1) ausgebildet ist und einen öffenbaren Boden aufweist, **dadurch gekennzeichnet, dass** der öffenbare Boden von einem in der Bodenebene verlagerbaren Körper (6) gebildet ist, der bevorzugt gemeinsam mit dem stabförmigen Körper (1) zwischen der Probenentnahmeposition und der zurückgezogenen Position verschiebbar ist, und ein Steuerelement (10), insbesondere eine Steuerrampe (11) des den Boden (7) bildenden Körpers (6) mit einem ortsfesten Auflaufelement zusammenwirkt, um die Öffnungsbewegung des Bodens in Abhängigkeit vom Hub des stabförmigen Körpers (1) zu steuern, wobei das Steuerelement (10) derart angeordnet ist, dass die Öffnungsbewegung des Bodens beendet ist, wenn der stabförmige Körper (1) am ortsfesten Auflaufelement zu liegen kommt.

2. Vorrichtung nach Anspruch 1, **dadurch gekennzeichnet, dass** der den Boden bildende Körper (6) zur Ermöglichung einer scherenartigen Öffnungsbewegung des Bodens (7) am stabförmigen Körper (1) verschwenkbar gelagert ist.

3. Vorrichtung nach Anspruch 1 oder 2, **dadurch gekennzeichnet, dass** der stabförmige Körper (1) und der den Boden bildende Körper (6) aus Metall bestehen.

4. Vorrichtung nach einem der Ansprüche 1 bis 3, **dadurch gekennzeichnet, dass** der stabförmige Körper (1) als Metallvollkörper ausgebildet ist.

5. Vorrichtung nach einem der Ansprüche 1 bis 4, **dadurch gekennzeichnet, dass** die dem Materialstrom zugewandte Stirnfläche des stabförmigen Körpers (1) im Wesentlichen dem lichten Querschnitt des Einführstutzens entspricht.

6. Vorrichtung nach einem der Ansprüche 1 bis 5, **dadurch gekennzeichnet, dass** der stabförmige Körper (1) mit einem ortsfesten, in Verschieberichtung (12) wirksamen Anschlag zusammenwirkt, der die zurückgezogene Position des stabförmigen Körpers (1) definiert.

7. Vorrichtung nach einem der Ansprüche 1 bis 6, **dadurch gekennzeichnet, dass** ein Probesammelbehälter unterhalb der Probenkammer (2) in der zurückgezogenen Position angeordnet ist, wobei zwischen dem Boden (7) der Probenkammer (2) und dem Probensammelbehälter eine freie Fallstrecke für das aus der Probenkammer (2) herabfallende Material vorgesehen ist.

8. Vorrichtung nach einem der Ansprüche 1 bis 7, **dadurch gekennzeichnet, dass** die Probenkammer (2) sich zum Boden (7) hin erweitert.

9. Vorrichtung nach Anspruch 8, **dadurch gekennzeichnet, dass** die Probenkammer (2) einen trapezförmigen Querschnitt aufweist.

10. Vorrichtung nach einem der Ansprüche 1 bis 9, **dadurch gekennzeichnet, dass** der stabförmige Körper (1) mit einer Vibrationseinrichtung in Wirkverbindung steht.

11. Vorrichtung nach einem der Ansprüche 1 bis 10, **dadurch gekennzeichnet, dass** die Innenfläche der Probenkammer (2) zur Vermeidung von Anhaftungen oberflächenbehandelt, insbesondere geglättet ist.

12. Vorrichtung nach einem der Ansprüche 1 bis 11, **dadurch gekennzeichnet, dass** der stabförmige Körper (1) mit einem hydraulischen, pneumatischen oder elektrischen Antrieb zusammenwirkt.

13. Vorrichtung nach einem der Ansprüche 1 bis 12, **dadurch gekennzeichnet, dass** der stabförmige Körper (1) an wenigstens einer Führungsschiene translatorisch geführt ist.

14. Vorrichtung nach Anspruch 13, **dadurch gekennzeichnet, dass** der stabförmige Körper (1) wenigstens zwei Rollen (3,4) trägt, die mit der Führungsschiene zusammenwirken.

15. Wärmetauscheranordnung einer Zementklinkerherstellungsanlage umfassend eine Mehrzahl von Wärmetauschern, in denen Rohmehl im Gegenstrom zu den heißen Abgasen aus dem Klinkerofen vorgewärmt und ggf. vorkalziniert werden kann, wobei eine für einen Heißmehlstrom vorgesehene, vertikale oder schräg nach unten verlaufende Rohrleitung des Warmetauscherstrangs einen Einführstutzen aufweist, **dadurch gekennzeichnet, dass** der Wärmetauscherstrang eine Probenentnahmevorrichtung nach einem der Ansprüche 1 bis 14 aufweist, deren Probenkammer durch den Einführstutzen in den Heißmehlstrom bringbar ist.

16. Wärmetauscheranordnung nach Anspruch 15, **dadurch gekennzeichnet, dass** die Achse des Einführstutzens mit der Horizontalen einen Winkel von 0° - 20°, insbesondere 0° - 10°, einschließt.

17. Wärmetauscheranordnung nach Anspruch 15 oder 16, **dadurch gekennzeichnet, dass** der Einführstutzen an einer Heißmehlaustrittsleitung der untersten Schwebegaswärmetauscherstufe des Wärmetauscherstrangs angeordnet ist.

## Claims

1. A device for taking samples from a material flow of finegrained and dry material, in particular in the cement industry, comprising an upwardly open sample chamber (2) capable of being introduced into, and retracted from, the material flow through an introduction socket, which sample chamber (2) is formed in a rod-shaped body (1) translationally guided between a sampling position and a retracted position and has an openable bottom, **characterized in that** the openable bottom is formed by a body (6) displaceable in the bottom plane, which is preferably movable together with the rod-shaped body (1) between the sampling position and the retracted position, a control element (10), in particular a control ramp (11), of the body (6) forming the bottom (7) cooperates with a stationary overrun element to control the opening movement of the bottom as a function of the displacement stroke of the rod-shaped body (1), wherein the control element (10) is arranged in such a manner that the opening movement of the bottom is terminated when the rod-shaped body (1) comes to lie on the stationary stop.

2. A device according to claim 1, **characterized in that** the bottom-forming body (6) is pivotably mounted on the rod-shaped body (1) so as to allow for a scissor-like opening movement of the bottom (7).

3. A device according to claim 1 or 2, **characterized in that** the rod-shaped body (1) and the bottom-forming body (6) are made of metal.

4. A device according to any one of claims 1 to 3, **characterized in that** the rod-shaped body (1) is designed as a solid metal body.

5. A device according to any one of claims 1 to 4, **characterized in that** the end face facing the material flow of the rod-shaped body (1) substantially corresponds to the clear cross section of the introduction socket.

6. A device according to any one of claims 1 to 5, **characterized in that** the rod-shaped body (1) cooperates with a stationary stop acting in the direction of displacement (12) and defining the retracted position of the rod-shaped body (1).

7. A device according to any one of claims 1 to 6, **characterized in that** a sample collecting container is arranged below the sample chamber (2) in the retracted position, wherein a free falling path for the material falling from the sample chamber (2) is provided between the bottom (7) of the sample chamber (2) and the sample collecting container.

8. A device according to any one of claims 1 to 7, **characterized in that** the sample chamber (2) widens towards the bottom (7).

9. A device according to claim 8, **characterized in that** the sample chamber (2) has a trapezoidal cross section.

10. A device according to any one of claims 1 to 9, **characterized in that** the rod-shaped body (1) is in operative connection with a vibration device.

11. A device according to any one of claims 1 to 10, **characterized in that** the inner surface of the sample chamber (2) is surface-treated, in particular smoothed, in order to avoid adherences.

12. A device according to any one of claims 1 to 11, **characterized in that** the rod-shaped body (1) cooperates with a hydraulic, pneumatic or electric drive.

13. A device according to any one of claims 1 to 12, **characterized in that** the rod-shaped body (1) is translationally guided on at least one guide rail.

14. A device according to claim 13, **characterized in that** the rod-shaped body (1) carries at least two rollers (3, 4) cooperating with the guide rail.

15. A heat exchanger arrangement of a cement clinker production plant, including a plurality of heat exchangers in which raw meal can be preheated and optionally precalcined in counter-flow to the hot exhaust gases from the clinker kiln, wherein a vertical or obliquely downwardly extending duct of the heat exchanger string, which is provided for a hot-meal flow, comprises an introduction socket, **characterized in that** the heat exchanger string comprises a sampling device according to any one of claims 1 to 14, whose sample chamber is capable of being introduced into the hot-meal flow through the introduction socket.

16. A heat exchanger arrangement according to claim 15, **characterized in that** the axis of the introduction socket encloses an angle of 0° to 20°, in particular 0° to 10°, with the horizontal.

17. A heat exchanger arrangement according to claim 15 or 16, **characterized in that** the introduction socket is arranged on a hot-meal outlet conduit of the lowermost suspension-type heat exchanger stage of the heat exchanger string.

## Revendications

1. Dispositif permettant de prélever des échantillons dans un flux de matière à grains fins et sec, notamment dans l'industrie du ciment, comprenant une chambre d'échantillonnage (2) apte à être introduite dans le flux de matière et à en être retirée par une goulotte d'introduction et ouverte vers le haut, qui est formée dans un corps en forme de tige (1) guidé en translation entre une position de prélèvement d'échantillon et une position en retrait et présentant un fond apte à pouvoir être ouvert, **caractérisé en ce que** le fond apte à pouvoir être ouvert est formé par un corps (6) apte à pouvoir être déplacé dans le plan du fond, qui est déplaçable, de préférence ensemble avec le corps en forme de tige (1), entre la position de prélèvement d'échantillon et la position en retrait et qui comprend un élément de commande (10), notamment une rampe de commande (11) du corps (6) formant le fond (7), qui coopère avec un élément stationnaire de rampe afin de commander le mouvement d'ouverture du fond en fonction du relevage du corps en forme de tige (1), l'élément de commande (10) étant disposé de façon que le mouvement d'ouverture du fond se termine lorsque le corps en forme de tige (1) vient en contact avec l'élément stationnaire de rampe.

2. Dispositif selon la revendication 1, **caractérisé en ce que** le corps (6) formant le fond est monté pivotant sur le corps en forme de tige (1) pour rendre possible un mouvement d'ouverture du fond (7) à la façon de ciseaux.

3. Dispositif selon la revendication 1 ou 2, **caractérisé en ce que** le corps en forme de tige (1) et le corps (6) formant le fond sont en métal.

4. Dispositif selon l'une quelconque des revendications 1 à 3, **caractérisé en ce que** le corps en forme de tige (1) est réalisé comme corps plein en métal.

5. Dispositif selon l'une quelconque des revendications 1 à 4, **caractérisé en ce que** la face frontale, orientée vers le flux de matière, du corps en forme de tige (1) correspond sensiblement à la section transversale intérieure de la goulotte d'introduction.

6. Dispositif selon l'une quelconque des revendications 1 à 5, **caractérisé en ce que** le corps en forme de tige (1) coopère avec une butée stationnaire agissant dans la direction de translation (12) et définissant la position en retrait du corps en forme de tige (1).

7. Dispositif selon l'une quelconque des revendications 1 à 6, **caractérisé en ce qu'**un récipient de collecte d'échantillons est disposé en-dessous de la chambre d'échantillonnage (2) dans la position en retrait, une distance de chute libre étant prévue pour la matière tombant de la chambre d'échantillonnage (2), entre le fond (7) de la chambre d'échantillonnage (2) et le récipient de collecte d'échantillons.

8. Dispositif selon l'une quelconque des revendications 1 à 7, **caractérisé en ce que** la chambre d'échantillonnage (2) est évasée vers le fond (7).

9. Dispositif selon la revendication 8, **caractérisé en ce que** la chambre d'échantillonnage (2) présente une section transversale en forme de trapèze.

10. Dispositif selon l'une quelconque des revendications 1 à 9, **caractérisé en ce que** le corps en forme de tige (1) est en liaison d'effet avec un dispositif vibratoire.

11. Dispositif selon l'une quelconque des revendications 1 à 10, **caractérisé en ce que** la surface intérieure de la chambre d'échantillonnage (2) a été traitée en surface, notamment lissée, pour éviter des attachements.

12. Dispositif selon l'une quelconque des revendications 1 à 11, **caractérisé en ce que** le corps en forme de tige (1) coopère avec un entraînement hydraulique, pneumatique ou électrique.

13. Dispositif selon l'une quelconque des revendications 1 à 12, **caractérisé en ce que** le corps en forme de tige (1) est guidé en translation le long d'au moins un rail de guidage.

14. Dispositif selon la revendication 13, **caractérisé en ce que** le corps en forme de tige (1) porte au moins deux rouleaux (3, 4) qui coopèrent avec le rail de guidage.

15. Agencement d'échangeur de chaleur d'une installation de fabrication de clinker de ciment comprenant une pluralité d'échangeurs de chaleur dans lesquels de la poudre brute est préchauffée ou pré-calcinée dans un flux en sens opposé par rapport aux gaz d'échappement chauds provenant du four à clinker, un conduit vertical ou s'étendant de manière inclinée vers le bas, de la ligne d'échangeur de chaleur, prévu pour le flux de poudre chaude présentant une goulotte d'introduction, **caractérisé en ce que** la ligne d'échangeur de chaleur comprend un dispositif permettant de prélever des échantillons selon l'une quelconque des revendications 1 à 14 dont la chambre d'échantillonnage est apte à être introduite dans le flux de poudre chaude.

16. Agencement d'échangeur de chaleur selon la revendication 15, **caractérisé en ce que** l'axe de la goulotte d'introduction enferme avec l'horizontale un angle de 0° à 20°, notamment de 0° à 10°.

17. Agencement d'échangeur de chaleur selon la revendication 15 ou 16, **caractérisé en ce que** la goulotte d'introduction est disposée sur un conduit de sortie de poudre chaude de l'étage le plus bas de l'échangeur de chaleur avec un gaz de suspension de la ligne d'échangeur de chaleur.
